# EUROPEAN PATENT SPECIFICATION

(11) **EP 2 581 766 B1**
(45) Date of publication and mention of the grant of the patent: **29.11.2023**
(21) Application number: 12188280.7
(22) Date of filing: 12.10.2012
(51) Int. Cl.: G01V 8/10, G01V 8/16, G01S 17/04

(54) **Photoelectric sensor**
Fotoelektrischer Sensor
Capteur photo-électrique

(30) Priority: 14.10.2011 JP 2011227249
(43) Date of publication of application: 17.04.2013
(73) Proprietor: Omron Co., Ltd., Kyoto-shi, Kyoto 600-8530 (JP)
(72) Inventor: Iida, Yusuke, Kyoto Kyoto 600-8530 (JP); Gondo, Kiyohiko, Kyoto Kyoto 600-8530 (JP); Iwamoto, Atsushi, Kyoto Kyoto 600-8530 (JP); Kishiba, Hideyuki, Kyoto Kyoto 600-8530 (JP); Kosaka, Koji, Kyoto Kyoto 600-8530 (JP)
(74) Representative: Horn Kleimann Waitzhofer Schmid-Dreyer Patentanwälte- und Rechtsanwälte PartG mbB

(56) References cited:
- JP-A- H11 225 057
- US-A1- 2004 124 337
- US-A1- 2011 018 722

## Description

### BACKGROUND

### 1. TECHNICAL FIELD

The present invention relates to a photoelectric sensor that projects light for the purpose of detection, receives the projected light or reflected light, and compares a received light amount to a predetermined threshold to detect an object.

### 2. RELATED ART

In order to ensure detection accuracy of the photoelectric sensor, it is necessary to adjust sensitivity such that a difference between a received light amount in the case that the detection target exists and a received light amount in the case that the detection target does not exist is sufficiently generated, and it is necessary that a value suitable to distinguish the both states be stored as a threshold.

As to sensitivity adjustment processing, for example, in JP 2004-101446 A, intensity of a current (light projection current) provided to a light projection drive unit or a gain of the received light amount is adjusted such that the received light amount becomes a target value defined by a user during a setting mode, thereby automatically adjusting the sensitivity (paragraphs 0060 to 0064, and 0072 to 0084 in JP 2004-101446 A).

In JP 2007-1394942 A, as an example in which the threshold is set according to user's setting work, after a SET key is pressed while a workpiece is placed in a detection area, the SET key is pressed again while the workpiece is removed from the detection area, and the threshold is set using two kinds of received light amounts, which are measured in response to the manipulations of the SET key (paragraph 0024 in JP 2007-139494 A). Further, in JP 2007-139494 A, a representative value symbolically indicating a temporal change of the received light amount is obtained, and the threshold is corrected according to the representative value (paragraphs 0028 to 0029 in JP 2007-139494 A).

As described in JP 2004-101446 A, in the setting mode of the photoelectric sensor, it is necessary to perform the threshold setting processing after the sensitivity is adjusted. Possibly the user is not particularly aware of necessity to perform the sensitivity adjustment processing, but the user sets the threshold without performing the sensitivity adjustment processing. Even if the user is aware of the necessity, sometimes the user sets the threshold while forgetting the sensitivity adjustment processing. In this case, it is necessary to set the threshold again after the sensitivity adjustment processing, whereby a burden of the user increases.

As described in JP 2007-139494 A, in the threshold setting processing, it is necessary for the user to perform the work according to a fixed procedure, whereby the burden of the user increases. When a person who is not familiar with the setting processing mistakenly performs the setting processing, there is a danger that the sensitivity and the threshold become the states that are not suitable for the detection.

In JPH11225057 A a photoelectric sensor with a sensitivity setting function is disclosed. A push-button type teaching switch is proposed in JPH11225057 A to simplify the teaching operation, and the photoelectric sensor is designed to selectively perform one of auto teaching, two-point teaching, maximum sensitivity setting and one-point teaching.

### SUMMARY

The present invention has been devised to solve the above problems, and an object thereof is to automatically adjust the sensitivity before the threshold is set even if a user is not particularly aware of the necessity to adjust sensitivity, and to be able to easily set the proper threshold using the received light amount of the adjusted sensitivity.

In accordance with a first aspect of the present invention, a photoelectric sensor is provided as defined in independent claim 1.

Further advantageous aspects of the present invention are defined in the dependent claims.

In the photoelectric sensor having the above configuration, the plural kinds of setting processing defined in each intended purpose of the photoelectric sensor are distinguished according to the content of the manipulation performed by the user, and the determination criterion is defined in each kind of setting processing in order to determine the reference received light amount used to set the threshold. When the user performs the manipulation to measure the received light amount along the manipulation procedure defined in the setting processing corresponding to the intended purpose, the received light amount data is measured in response to the manipulation, and the reference received light amount is determined according to the determination criterion corresponding to the content of the manipulation. Because the determined reference received light amount becomes the value suitable for the setting of the threshold through the sensitivity adjustment processing, the sensitivity is set in the good state even if the user is not particularly aware of the necessity to adjust the sensitivity, and the received light amount of the good sensitivity can be set to the reference received light amount. Therefore, the threshold can be set to the value suitable for the detection.

The number of reference received light amounts is not limited to one, but sometimes it is necessary to determine the multiple reference received light amounts having the different levels according to the setting processing. The processing of determining the reference received light amount can be performed after the sensitivity adjustment processing or in parallel to the sensitivity adjustment processing. Alternatively, after the reference received light amount is determined, a parameter used to decide the sensitivity may be adjusted such that one of the determined reference received light amounts is suitable for a predetermined target value.

One embodiment of the photoelectric sensor further includes a received light amount determination part that determines the received light amount set to the threshold based on the reference received light amount, which is adjusted so as to be suitable for the target value, according to the determination criterion varying the content of the manipulation received by the manipulation receiver. Accordingly, in the configuration, the user performs the manipulation to measure the received light amount according to the manipulation procedure defined in the setting processing corresponding to the intended purpose. Therefore, the good sensitivity is set, and the threshold can automatically be obtained at a level suitable for the good sensitivity.

In accordance with a second aspect, the photoelectric sensor further includes a storage part.

According to this aspect, a sensitivity adjustment rule and a received light amount decision rule are stored in the storage part. The sensitivity adjustment rule defines processing of adjusting sensitivity using the received light amount measured in response to the manipulation with respect to plural kinds of setting processing, which is prepared in each intended purpose by varying a content of the manipulation in each intended purpose of the photoelectric sensor, the manipulation being performed to issue an instruction to measure the received light amount used to set the threshold, and the received light amount decision rule defines processing of fixing reference received light amount used to set the threshold based on the received light amount of the adjusted sensitivity.

The sensitivity adjuster adjusts the sensitivity according to the sensitivity adjustment rule corresponding to the content of the received manipulation while taking the received light amount in response to the manipulation, when the manipulation part receives the manipulation to issue an instruction to measure the received light amount.

A reference-received light amount decision part decides the reference received light amount used to set the threshold based on the received light amount, which is measured in response to the received manipulation and is suitable for the sensitivity adjusted by the sensitivity adjuster, based on the fact that one of the plural kinds of setting processing is fixed by the received manipulation according to the received light amount decision rule corresponding to the fixed setting processing.

Even in the photoelectric sensor of the second aspect, the plural kinds of setting processing defined in each intended purpose of the photoelectric sensor are distinguished according to the content of the manipulation performed by the user. When the user performs the manipulation to measure the received light amount along the manipulation procedure defined in the setting processing corresponding to the intended purpose, the received light amount data is measured in response to the manipulation, the sensitivity is adjusted according to the rule defined for the setting processing corresponding to the content of the manipulation using the measured received light amount, and the reference received light amount used to set the threshold is selected based on the received light amount suitable for the adjusted sensitivity. Even if the user is not particularly aware of the necessity to adjust the sensitivity, after the sensitivity is adjusted to the good state, the reference received light amount is selected based on the post-adjustment sensitivity. Therefore, the sensitivity and the threshold can properly be set to perform the detection processing.

The determination criterion is defined for each kind of setting processing in order to determine the threshold from the reference received light amount decided by the received light amount decision rule, and the determination criterion is stored in the storage part. Therefore, the threshold can automatically be set after the adjustment of the sensitivity and the decision of the reference received light amount. Alternatively, not limited to this, the reference received light amount is displayed, and a manual setting of the threshold by the user may be received. The manual setting of the threshold can also be applied to the photoelectric sensor of the first aspect.

In the case that a common thread is set to the kinds of setting processing as the program for the sensitivity adjustment processing, a program describing that a sensitivity adjusting thread performing part is informed of variables, such as the target value to be described later, may be used as the sensitivity adjustment rule.

In one embodiment of the photoelectric sensor, a sensitivity adjustment rule is stored in the storage part, the sensitivity adjustment rule defining that the sensitivity being adjusted with respect to at least one of the kinds of setting processing such that the received light amount measured in response to the manipulation is suitable for a predetermined target value and that, when the received light amount measured after the adjustment is greater than the target value, the sensitivity adjustment processing is restarted such that the received light amount greater than the target value is suitable for the target value.

According to the above embodiment, even if the received light amount used to adjust the initial sensitivity is larger than the subsequent received light amounts, the sensitivity is adjusted again by subsequently obtaining the received light amount greater than the target value.

In another embodiment, a sensitivity adjustment rule and a received light amount decision rule are stored in the storage part, the sensitivity adjustment rule defining that the sensitivity is adjusted such that a received light amount measured in response to a first-time manipulation is suitable for a predetermined target value with respect to setting processing having the content of the manipulation in which the manipulation to issue an instruction to measure the received light amount is performed twice, that, when a received light amount measured in response to a second-time manipulation is greater than the target value used in the sensitivity adjustment processing, the sensitivity adjustment processing is restarted such that the received light amount greater than the target value is suitable for the target value, and that the received light amount caused to agree with the target value in the sensitivity adjustment processing performed in response to the first-time manipulation is corrected to a value suitable for the re-adjusted sensitivity according to the restart of the sensitivity adjustment processing, the received light amount decision rule defining that the pair of received light amounts, which are measured in response to the first-time manipulation and the second-time manipulation and are suitable for the final sensitivity, is set to the reference received light amount used to set the threshold.

In the setting processing to which the sensitivity adjustment rule and the received light amount decision rule are applied, for example, the user performs the first-time manipulation while the workpiece is placed in the detection area, and the user performs the second-time manipulation while the workpiece is not placed. However, the order of the manipulations may be reversed. Even if the user performs the manipulations in any order, the sensitivity adjustment processing, in which the larger one of the received light amounts measured in response to the switch manipulations is caused to agree with the target value, is performed, and the received light amount, which is obtained with the adjusted sensitivity in the case that the workpiece exists, and the received light amount, which is obtained with the adjusted sensitivity in the case that the workpiece does not exist, are set to the reference received light amount. Therefore, the threshold can properly be set.

In the photoelectric sensor in accordance with another embodiment, a sensitivity adjustment rule and a received light amount decision rule are stored in the storage part, the sensitivity adjustment rule defining that a maximum value and a minimum value of the measured received light amounts are extracted while the received light amount is measured during the manipulation with respect to setting processing having the content of the manipulation in which the manipulation to issue an instruction to measure the received light amount is continued for a predetermined time and that the sensitivity adjustment processing is performed every time the maximum value is updated through the setting processing while the minimum value of the received light amounts at that time point is corrected to a value suitable for the adjusted sensitivity, the received light amount decision rule defining that the maximum value and the minimum value of the received light amounts are set to the reference received light amount used to set the threshold at a time point at which the manipulation is ended.

In the setting processing in which the program is used, the workpiece passes through the detection target position, and the manipulation is continued for at least the time including before and after the passage, whereby the sensitivity is adjusted such that the maximum received light amount obtained in the time is caused to agree with the target value. When the minimum received light amount exists in the received light amounts sampled before the maximum received light amount, the minimum received light amount is corrected to the value suitable for the post-correction sensitivity. Therefore, the maximum received light amount and the minimum received light amount are acquired with the optimum sensitivity while the workpiece passes, and the maximum received light amount and the minimum received light amount are set to the reference received light amount, so that the threshold can properly be set.

Three embodiments that are common to the photoelectric sensor in accordance with the first and second aspects will be described below. The photoelectric sensor in accordance with a first embodiment further includes: a storage part in which the target value is stored; and a target value setting part that, according to a manipulation performed in the manipulation part in order to set the target value used in the sensitivity adjustment processing, stores the target value set by the manipulation in the storage part. According to the configuration, the sensitivity can be adjusted such that the optimum received light amount the user thinks is obtained.

The photoelectric sensor in accordance with the present invention includes a display part that displays the threshold, which is fixed based on the reference received light amount, together with the received light amount of the sensitivity adjusted by the sensitivity adjuster. In the display part, during the detection processing, the user checks the detection result while comparing the received light amount and the threshold, and the user can determines whether the sensitivity and the threshold are suitable for the detection.

The photoelectric sensor in accordance with a third embodiment further includes: a display part that displays the received light amount; and an adjuster that obtains a degree of a change in received light amount suitable for the adjustment performed through the sensitivity adjustment processing with respect to the received light amount used in detection processing in predetermined timing while the detector performs the detection processing, changes the stored threshold according to the degree of the change, and changes the received light amount displayed on the display part to a value in which actual received light amount is corrected according to the degree of the change.

According to this embodiment, when the received light amount changes as time advances, the detection processing can stably be performed because the threshold is changed according to the degree of the change. Even if the sensitivity or the threshold varies, the state in which the value close to the received light amount suitable for the initial sensitivity adjustment processing is displayed is maintained in the display part, so that the user can check the light-receiving state with a constant reference.

According to the present invention, the user performs the work to set the threshold, whereby the sensitivity is automatically adjusted before the threshold is set. Therefore, the threshold can be set to the proper value based on the received light amount suitable for the post-adjustment sensitivity. Additionally, the adjustment of the sensitivity and the setting of the threshold can easily be performed by performing the manipulation corresponding to the intended purpose in each intended purpose of the photoelectric sensor, and therefore usability is largely enhanced.

### BRIEF DESCRIPTION OF THE DRAWINGS

FIG. 1 is a perspective view illustrating an appearance of an optical fiber type photoelectric sensor;
FIG. 2 is a perspective view illustrating a state in which a top cover of the photoelectric sensor in FIG. 1 is opened;
FIG. 3 is a view illustrating a top surface including a manipulation part and a display part of the photoelectric sensor when the top surface is viewed from a front side;
FIG. 4 is a block diagram illustrating an electric configuration of the photoelectric sensor;
FIG. 5 is a flowchart illustrating a schematic procedure of a progress of the tuning while the procedure is correlated with a display mode of an indicator;
FIG. 6 is a flowchart illustrating a procedure of two-point tuning while the procedure is correlated with the display mode of the indicator;
FIG. 7 is a flowchart illustrating a procedure of moving workpiece tuning while the procedure is correlated with the display mode of the indicator;
FIGS. 8A to 8C are views illustrating an example in which display on a display part is switched in response to a manipulation to change a target value used to adjust sensitivity;
FIG. 9 illustrates a graph in which a relationship between a display received light amount and an internal received light amount and a relationship between a display threshold and an internal threshold are summarized;
FIG. 10 is a view illustrating a display example when enable and disable of a function of automatically adjusting the display received light amount and the internal threshold are switched; and
FIG. 11 is a flowchart illustrating a procedure of automatic adjustment processing.

### DETAILED DESCRIPTION

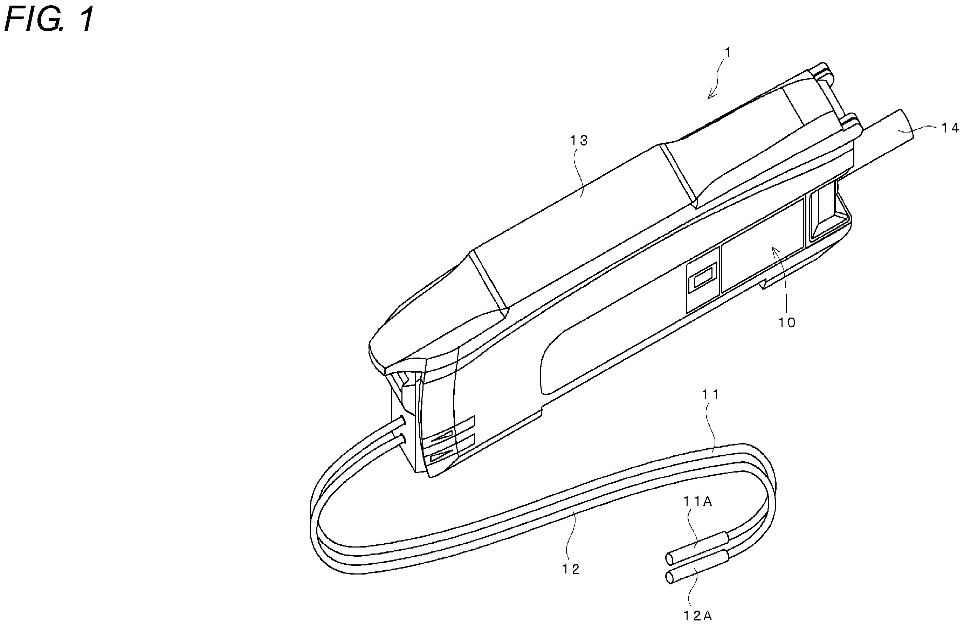

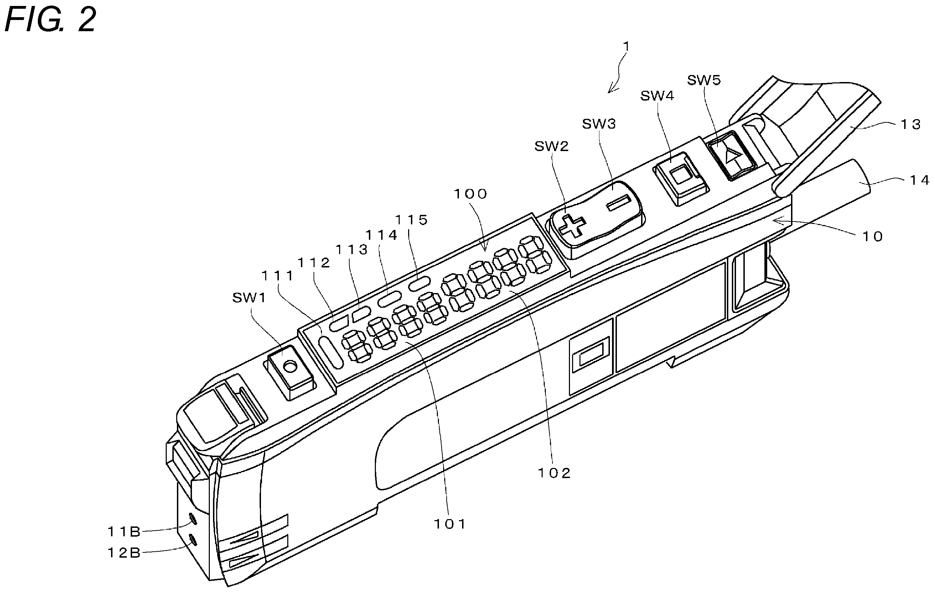

FIGS. 1 and 2 illustrate an appearance of an optical fiber type photoelectric sensor to which the present invention is applied.

A photoelectric sensor 1 includes a main body 10 and a pair of optical fibers 11 and 12 attached to a front surface of the main body 10. The optical fiber 11 is used to project light, and the optical fiber 12 is used to receive light. Head parts 11A and 12A including lenses are attached to front end portions of the optical fibers 11 and 12, respectively. The actual optical fibers 11 and 12 can be lengthened compared with the state in FIG. 1.

The optical fibers 11 and 12 are inserted in insertion ports 11B and 12B in the front surface of the main body 10, respectively. A light projecting part is provided near the insertion port 11B of the light projection optical fiber 11, and a light-receiving part is provided near the insertion port 12B of the light-receiving optical fiber 12. A connection cable 14 is drawn from a rear surface of the main body 10.

During use of the photoelectric sensor 1, the head parts 11A and 12A of the optical fiber 11 and 12 face each other with a predetermined distance. The light output from the light projecting part is output from the head part 11A through the optical fiber 11, and the light incident to the light-receiving-side head part 12A reaches the light-receiving part through the optical fiber 12. When an object is inserted between the head parts 11A and 12A, a light quantity received by the light-receiving part is reduced because the light traveling from the head part 11A toward the head part 12A is obstructed.

Received light amount data generated by the light-receiving part is input to a controller (CPU), whether an optical path is obstructed is determined by comparing the received light amount data to a previously-stored threshold, and a determination result is output.

In the example in FIG. 1, the photoelectric sensor 1 is set so as to act as a transmission type sensor, in which the light-receiving part receives the light projected from the light projecting part and the state in which the optical path is obstructed is determined to be "existence of object". Alternatively, common head parts are attached to the leading ends of the optical fibers 11 and 12, and the photoelectric sensor 1 may act as a reflection type photoelectric sensor that receives the light reflected from the object.

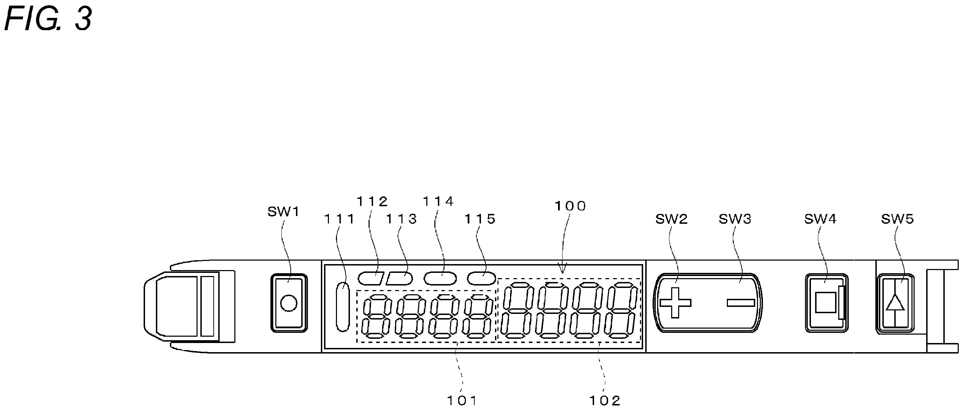

A display part 100 and plural push-button switches SW1 to SW5 are provided on the top surface of the main body 10. The top surface is covered with a cover 13 during use. During setup, the cover 13 is opened to be able to manipulate the push-button switches SW1 to SW5. FIG. 2 is a perspective view illustrating the main body 10 in which the cover 13 is opened, and FIG. 3 is a view illustrating a top surface when the top surface is viewed from a front side. Because of the transparent cover 13, the display of the display part 100 can be checked through the cover 13 even if the cover 13 is attached.

A configuration of the top surface will be described with reference to FIGS. 2 and 3.

In the embodiment, the push-button switch SW1 is disposed in a position close to the front surface of the main body, the display part 100 is provided at the back of the push-button switch SW1, and four push-button switches SW2, SW3, SW4, and SW5 are disposed at the back of the display part 100. Although button portions of the push-button switches SW2 and SW3 are integrally formed, switch bodies (not illustrated) in the main body 10 are independently provided.

A pair of indicators 101 and 102 and five indicating lamps 111 to 115 are provided in the display part 100. Each of the indicators 101 and 102 is constructed by four 7-segment LEDs, and displays numbers of four digits or less and an alphabetical character string.

The front push-button switch SW1 is used in tuning which will be described later. Hereinafter the switch SW1 is referred to as a "tuning button SW1". The pair of push-button switches SW2 and SW3 at the back of the display part 100 is used to change menus or numerical values, which is displayed on the indicators 101 and 102.

The push-button switch SW4 is used to switch between a measurement mode and a setting mode. When some sort of setting is performed in the setting mode, a set content is fixed. When the push-button switch SW4 switches the setting mode to the measurement mode, the measurement is started with the set content.

The push-button switch SW5 is used to switch an output form of the photoelectric sensor 1. Specifically, one of a "light-on mode" in which the output is put into an on state when the received light amount is greater than the threshold and a "dark-on mode" in which the output is put into the on state when the received light amount is less than the threshold is selected. Generally the dark-on mode is selected when the transmission type photoelectric sensor 1 is used, and the light-on mode is selected when the reflection type photoelectric sensor 1 is used.

The indicating lamp 111 is lit when a detection signal from the photoelectric sensor 1 becomes the on state in detection processing. The indicating lamp 112 is lit when the light-on mode is selected, and the indicating lamp 113 is lit when the dark-on mode is selected.

The indicating lamp 114 is lit when automatic adjustment processing is enabled, and the indicating lamp 115 is lit during and after the tuning.

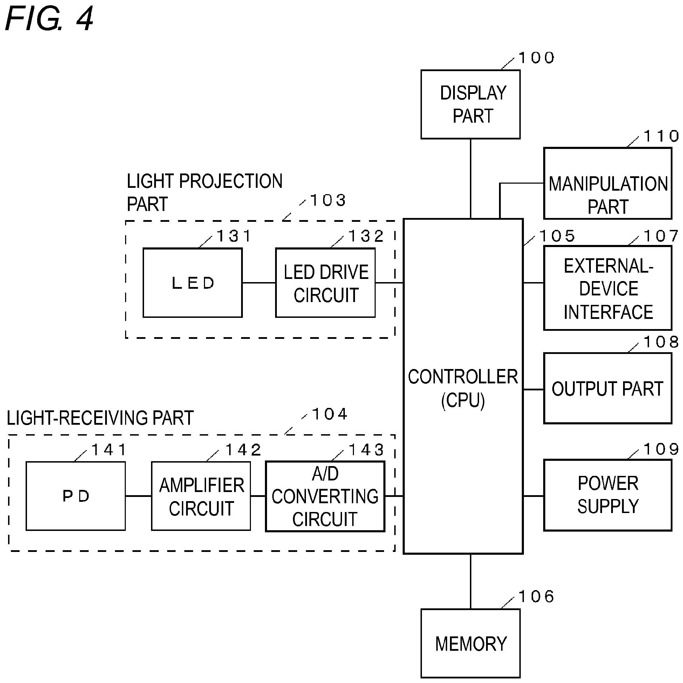

FIG. 4 illustrates an electrical configuration of the photoelectric sensor 1.

In the photoelectric sensor 1, a CPU 105 constituting the controller is connected to a light projecting part 103, an light-receiving part 104, a memory 106 in which a program is stored, a display part 100, a manipulation part 110, an external-device interface 107, an output part 108, and a power supply 109.

The display part 100 includes the indicators 101 and 102 and the indicating lamps 111 to 115, and the manipulation part 110 includes the push-button switches SW1 to SW5. The light projecting part 103 includes an LED 131 and an LED drive circuit 132, and the light-receiving part 104 includes a photodiode (PD) 141, an amplifier circuit 142, and an A/D converting circuit 143. In the light projecting part 103, a driving current passes from the LED drive circuit 132 to the LED 131 to perform light projection processing. In the light-receiving part 104, the output from the photodiode 141 is processed by the amplifier circuit 142 and the A/D converting circuit 143 to generate digital data (hereinafter referred to as "received light amount data") expressing the received light amount.

According to the program stored in the memory 106, the CPU 105 inputs the received light amount data from the light-receiving part 104 to perform the detection processing while controlling an operations of the light projecting part 103 and the light-receiving part 104. The detection result is output through the output part 108 or the external-device interface 107.

When the setting mode is selected by the switch SW4 in FIGS. 2 and 3, a setting menu is displayed on the indicators 101 and 102 of the display part 100. A user performs a predetermined setting while switching menu display using the switches SW2 and SW3.

When the tuning switch SW1 is manipulated in the measurement mode, setting processing called "tuning" is performed. Threshold setting processing and sensitivity adjustment processing, which are necessary for the detection processing, are collectively performed in the tuning. In the embodiment, four kinds of pieces of tuning are prepared by intended purpose of the photoelectric sensor.

In the adjustment of the sensitivity, while the received light amount is sampled at a high speed, intensity of a drive current passing through the light projecting part 103 and a gain of the amplifier circuit 142 of the light-receiving part 104 is changed until the sampled received light amount becomes a predetermined target value. In setting the target value and threshold of the adjustment, a reference depends on the kind of the tuning. In the embodiment, the sensitivity and the threshold can automatically be set to sensible states by easy work performed by the user.

In Table I an intended purpose, a user's work content, a sensitivity adjusting method, and a threshold setting method are summarized in each of the four kinds of the tuning. An outline of processing will be described in each piece of tuning with reference to table I.

### <Two-point tuning>

The tuning is performed in performing processing of determining existence or non-existence of the object. The user manipulates the tuning button SW1 twice, one of the manipulations is performed while a detection target (hereinafter referred to as a "workpiece") is placed in a detection area, and the other manipulation is performed while the workpiece is not placed. It is necessary to perform each manipulation within three seconds, but there is no particular limitation to the order in which the workpiece is placed or not placed.

In the sensitivity adjustment processing, the larger one of the received light amount (first-time received light amount) obtained during the first-time manipulation and the received light amount (second-time received light amount) obtained during the second-time manipulation is caused to agree with the target value. The target value is set to a maximum value (hereinafter referred to as a "display maximum value", the display maximum value is "9999" in the embodiment) of a numerical value that can be displayed on the indicators 101 and 102. The threshold is set to an intermediate value between the first-time received light amount and the second-time received light amount after the sensitivity adjustment processing.

### <Moving workpiece tuning>

The tuning is performed when the photoelectric sensor 1 is operated such that the moving workpiece is set to the detection target, such that the output from the sensor is put into a detection state while the workpiece passes through the detection area, and such that the output is put into a non-detection state when the passing is completed. When performing the moving workpiece tuning, the user continuously presses the tuning button SW1 for at least seven seconds. The workpiece is moved on the same condition as the detection, and the tuning button SW1 is continuously pressed in a period including the state in which the workpiece exists in the detection area and the state in which the workpiece does not exist in the detection area.

In the sensitivity adjustment processing, the maximum received light amount in the period during which the tuning button SW1 is manipulated is caused to agree with the target value. In this case, the target value is also set to the display maximum value. The threshold is set to an intermediate value between the maximum received light amount and the minimum received light amount after the sensitivity adjustment processing.

### <Positioning tuning>

The tuning is performed when the photoelectric sensor 1 is operated such that the output is put into the detection state when the detection target reaches a target position, and such that the output is put into the non-detection state in other cases. The user manipulates the tuning button SW1 twice similarly to the two-point tuning, and it is necessary for the user to continuously press the tuning button SW1 for at least three seconds in the second-time manipulation. The first-time manipulation is performed while the workpiece is not placed, and the workpiece is placed in the target position in the second-time manipulation.

In the sensitivity adjustment processing, the received light amount obtained in the first-time manipulation is brought to the intermediate value (in the embodiment, 5000) in the numerical range displayed on the display part 100. The received light amount at a time point at which three seconds elapse since the second-time manipulation is set to the threshold.

### <Maximum sensitivity tuning>

The tuning is performed in the case that it is necessary to switch on and off of the photoelectric sensor with a relatively small change of the received light amount, like a long distance between the head parts 11A and 12A, and a high probability that dirt or dust adheres to the head parts 11A and 12A. Although the user continuously presses the tuning button SW1 for at least three seconds, it is necessary for the user to press the tuning button SW1 within seven seconds in order to distinguish the maximum sensitivity tuning from the moving workpiece tuning. In the case that the transmission type photoelectric sensor 1 is used, the tuning button SW1 is manipulated while the workpiece is placed in the detection area. In the case that the reflection type photoelectric sensor 1 is used, the tuning button SW1 is manipulated while the workpiece is excluded from the detection area. That is, in both the transmission and reflection type photoelectric sensors 1, the tuning button SW1 is manipulated after the state in which the light is hardly incident to the light-receiving part 104 is set.

In the sensitivity adjustment processing, the maximum sensitivity is set by setting the drive current provided to the light projecting part 103 or the gain of the light-receiving part 104 to the maximum value. The received light amount on the display is adjusted such that the received light amount measured by manipulating the tuning button SW1 under the maximum sensitivity condition is displayed as "0" on the display part 100. The threshold is set to a value (999) corresponding to about 10% of numerical range displayed on the display part 100.

A program in which a rule or a processing procedure necessary for the sensitivity adjustment and the setting of the threshold in the above manner from the user's manipulation mode is defined with respect to each of the four kinds of the tuning is stored in the memory 106 in FIG. 4. The CPU 105 specifies the kind of the tuning corresponding to the manipulation mode from the number of manipulation times of the tuning button SW1 or duration of the manipulation, and executes the program for the specified tuning.

It is necessary for the user to perform different work in each kind of the tuning. However, a priority may be given to either the state in which the workpiece is placed or the state in which the workpiece is not placed in the two-point tuning of the embodiment, and the workpiece may be moved from the beginning of the work in the moving workpiece tuning. Therefore, a burden of the user is relatively light, and an operational error is hardly generated. The user manipulates the tuning button SW1 to issue an instruction to measure the received light amount for the purpose of the threshold setting. On the other hand, in the photoelectric sensor 1, after the sensitivity adjustment processing is performed based on the received light amount measured in response to the manipulation, the threshold is set based on the received light amount suitable for the adjusted sensitivity.

As will be described below, in the tuning, the kind and processing result of the performed tuning are displayed on the indicator 101 and 102. Therefore, the user can easily check whether the tuning is correctly selected and the processing result of the selected tuning.

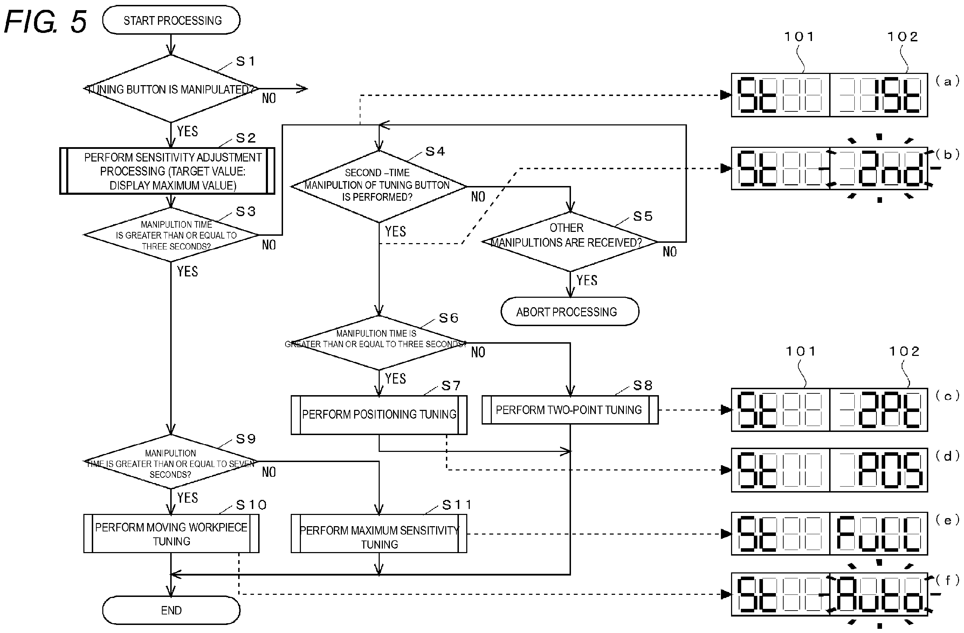

FIG. 5 illustrates a flow of the tuning progress by the user's manipulation while the flow is correlated with main display on the indicators 101 and 102. In display examples (a) to (f) in FIG. 5, "St" displayed on the left indicator 101 is an abbreviation of a name "Smart tuning" of the tuning named for users. The display of "St" is substantially fixed on the indicator 101 during the tuning, and the display on the right indicator 102 is variously switched.

The flow of the tuning will be described with reference to FIG. 5. Although not illustrated in FIG. 5, the CPU 105 performs interruption at substantially constant time intervals to sample the received light amount while the tuning button SW1 is manipulated (the same holds true for subroutines in each kind of the tuning (Steps S7, S8, S10, and S11)).

When the tuning button SW1 is initially manipulated (YES in Step S1), the CPU 105 performs the sensitivity adjustment processing while sampling the received light amount according to the manipulation. In this stage, the display maximum value (9999) is set to the target value, and the light projection current and the gain of the light-receiving part are adjusted until the received light amount reaches the target value.

When the first-time manipulation time of the tuning button SW1 is less than three seconds (NO in Step S3), a character string "1 St" (means "first") is displayed on the indicator 102 as illustrated in the part (a) of FIG. 5. At this point, when the user performs the second-time manipulation of the tuning button SW1 (YES in Step S4), the display of the indicator 102 is switched to the state in which a character string "2nd" (means "second") is displayed in a blinking manner as illustrated in the part (b) of FIG. 5. The blinking display is continued until the manipulation of the tuning button SW1 is ended.

When the second-time manipulation time of the tuning button SW1 is less than three seconds (NO in Step S6), a subroutine (Step S8) of the two-point tuning is performed. The blinking display of the indicator 102 is ended in response to the performance of the subroutine, and a character string "2Pt" (abbreviation of "two point tuning") is displayed as illustrated in the part (c) of FIG. 5.

When the second-time manipulation time of the tuning button SW1 is greater than or equal to three seconds (YES in Step S6), a subroutine (Step S7) of the positioning tuning is performed. In response to the performance of the subroutine, a character string "POS" (abbreviation of "position") is displayed on the indicator 102 as illustrated in the part (d) of FIG. 5.

When the first-time manipulation of the tuning button SW1 is greater than or equal to three seconds (YES in Step S3) and when the first-time manipulation of the tuning button SW1 is ended before seven seconds elapses (NO in Step S9), a subroutine (Step S11) of the maximum sensitivity tuning is performed. In response to the performance of the subroutine, the indicator 102 is switched so as to display a character string "Full" as illustrated in the part (e) of FIG. 5.

When the first-time manipulation of the tuning button SW1 is greater than or equal to seven seconds (YES in both Steps S3 and S9), a subroutine (Step S10) of the moving workpiece tuning is performed. In response to the performance of the subroutine, the indicator 102 is switched so as to display a character string "Auto" as illustrated in the part (f) of FIG. 5.

As described above, in the embodiment, the kind of the tuning is specified according to the manipulation mode of the tuning button SW1, and the specified tuning is performed, and the number of manipulation times of the tuning button SW1 and the character string indicating the specified tuning are displayed on the indicator 102. Therefore, the user can easily check the work flow or whether the transition is made to the intended tuning of the user.

Although not illustrated in FIG. 5, when the tuning button SW1 is continuously pressed for three seconds, the indicating lamp 115 is switched from the lighting state to the blinking state. Accordingly, when selecting the positioning tuning or the maximum tuning, the user can recognize the timing at which the user's finger is released from the tuning button SW1 by blinking indicating lamp 115.

In the embodiment, at the time point at which the tuning button SW1 is initially manipulated, because the kind of the tuning cannot be specified, the sensitivity adjustment processing is performed while the display maximum value is set to the target value (Steps S1 and S2). However, the display maximum value does not indicate that the photodiode 141 is saturated. For example, for the transmission type photoelectric sensor 1, when the tuning button SW1 is manipulated while the workpiece is placed, the weak level becomes the display maximum value because the sensitivity adjustment processing is performed while the fairly weak light is incident to the photodiode 141. When the workpiece is removed after the adjustment, because the strong light is incident to the photodiode 141, the received light amount becomes the level greater than the display maximum value.

In the two-point tuning or the moving workpiece tuning, the sensitivity adjustment processing is performed again in consideration of the above phenomenon, when the received light amount greater than the display maximum value is acquired after the processing is started. When the sensitivity adjustment processing is restarted, the received light amount, which is acquired as a candidate of a reference value used to set the threshold before the restarted sensitivity adjustment processing, is corrected to a value suitable for the re-adjusted sensitivity.

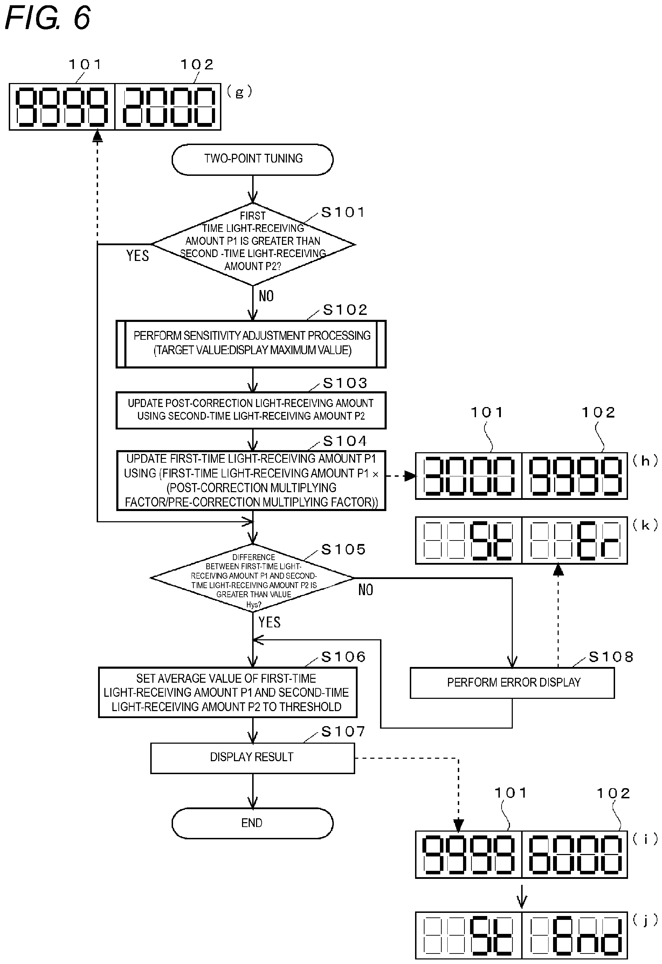

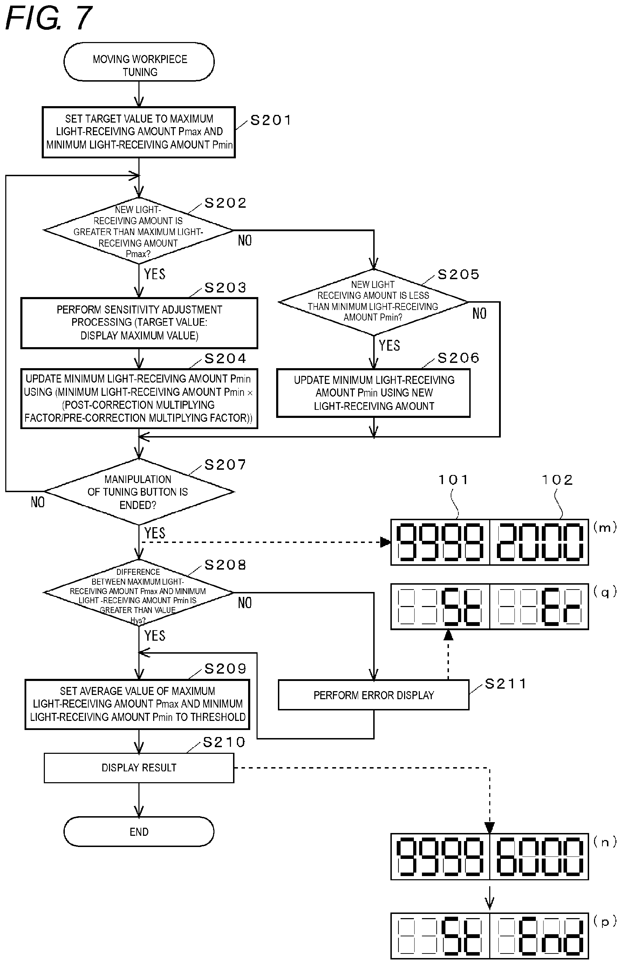

FIG. 6 illustrates a detailed procedure of the two-point tuning, and FIG. 7 illustrates a detailed procedure of the moving workpiece tuning, respectively. In FIGS. 6 and 7, the display mode on the indicators 101 and 102 is correlated with a proper point in the flowchart.

In the two-point tuning in FIG. 6, a received light amount P1 (first-time received light amount) sampled in response to the first-time manipulation of the tuning button SW1 and a received light amount P2 (second-time received light amount) sampled in response to the second-time manipulation of the tuning button SW1 are compared in Step S101. At this point, the first-time received light amount agrees with the target value of 9999 because the first-time received light amount is the received light amount at the time point at which the sensitivity adjustment processing in Step S2 of FIG. 5 is ended. The second-time received light amount is also the received light amount sampled during the sensitivity adjustment processing.

When the first-time received light amount P1 is greater than the second-time received light amount P2 (YES in Step S101), as illustrated in the part (g) of FIG. 6, the first-time received light amount P1 is displayed on the left indicator 101, and the second-time received light amount P2 is displayed on the right indicator 102. At this point, a difference between the first-time received light amount P1 and the second-time received light amount P2 is compared to a value Hys corresponding to a detection error (Step S105). When the difference between the both is greater than the value Hys, the flow goes to Step S106, an average value of the first-time received light amount P1 and the second-time received light amount P2 is obtained and set to the threshold.

The processing result is displayed in Step S107. For example, as illustrated in the part (i) of FIG. 6, the maximum received light amount (9999) is caused to agree with the target value through the sensitivity adjustment processing is displayed on the left indicator 101, and the set threshold is displayed on the right indicator 102. The display illustrated in the part (i) of FIG. 6 is switched to setting end display illustrated in the part (j) of FIG. 6 after a predetermined time elapses or when the user performs the switch manipulation.

When the second-time received light amount P2 is greater than the first-time received light amount P1 (NO in Step S101), the sensitivity adjustment processing is performed again in Step S102. In this case, the drive current of the light projecting part 103 or the gain of the light-receiving part 104 is decreased such that the currently-sampled received light amount greater than the display maximum value becomes the target value (display maximum value).

When the sensitivity adjustment processing is ended, the second-time received light amount P2 is updated by the post-adjustment received light amount (Step S103). The first-time received light amount P1 is corrected by multiplying the first-time received light amount P1 by (post-adjustment multiplying factor/pre-adjustment multiplying factor) (Step S104). As used herein, the multiplying factor means an accumulated value of a rate of change of sensitivity parameters, such as the drive current of the light projecting part 103 and the gain of the light-receiving part 104. Accordingly, when the drive current or the gain is decreased through the second-time sensitivity adjustment processing, the first-time received light amount P1 is reduced by the correction in Step S104.

When the correction in Step S104 is ended, as illustrated in the part (h) of FIG. 6, the post-correction first-time received light amount P1 is displayed on the indicator 101, and the second-time received light amount P2 (that becomes 9999 like the target value) obtained using the re-adjusted sensitivity is displayed on the indicator 102.

Then Steps S105, S106, and S107 are performed in the similar flow described above.

When the difference between the first-time received light amount P1 and the second-time received light amount P2 is less than or equal to the value Hys, the threshold is calculated and the result is displayed (Steps S106 and S107). However, the flow goes to Step S108 before Steps S106 and S107, and error display is performed for a predetermined time as illustrated in the part (k) of FIG. 6.

In the moving workpiece tuning in FIG. 7, the target value, which is used for the sensitivity adjustment processing in Step S2 of FIG. 5, is set to a maximum received light amount Pmax and a minimum received light amount Pmin as initial values (Step S201).

In Step S202, the newly-sampled received light amount (hereinafter referred to as a "new received light amount") is compared to the maximum received light amount Pmax. When the new received light amount is less than the maximum received light amount Pmax (NO in Step S202), the new received light amount is compared to the minimum received light amount Pmin. When the new received light amount is less than the minimum received light amount Pmin (YES in Step S205), the minimum received light amount Pmin is updated to the new received light amount (Step S206).

On the other hand, when the new received light amount is greater than the maximum received light amount Pmax (YES in Step S202), the sensitivity adjustment processing is performed in Step S203. In this case, the display maximum value is set to the target value, and the drive current of the light projecting part 103 or the gain of the light-receiving part 104 is decreased such that the new received light amount greater than the maximum received light amount Pmax becomes the maximum received light amount Pmax.

In Step S204, the minimum received light amount Pmin is corrected by multiplying the minimum received light amount Pmin by (post-adjustment multiplying factor/pre-adjustment multiplying factor).

The pieces of processing in Steps S202 to S206 are performed until the manipulation of the tuning button SW1 is ended. As a result, while the tuning button SW1 is manipulated, the sensitivity is adjusted such that the maximum received light amount Pmax becomes the display maximum value, and the minimum received light amount Pmin is corrected to the value suitable for the adjusted sensitivity. At this point, as illustrated in the part of (m) of FIG. 7, the maximum received light amount Pmax is displayed on the indicator 101, and the minimum received light amount Pmin is displayed on the indicator 102.

Whether a difference between the maximum received light amount Pmax and the minimum received light amount Pmin is greater than the value Hys is checked (Step S208), an average value of the maximum received light amount Pmax and the minimum received light amount Pmin is obtained and set to the threshold (Step S209), and the result is displayed (Step S210). In the display of the result, similarly to the two-point tuning in FIG. 6, the maximum received light amount updated using by the post-correction sensitivity is displayed on the left indicator 101, and the threshold is displayed on the right indicator 102 (the part (n) in FIG. 7). Then the display makes the transition to the ending display (the part (p) in FIG. 7).

When the difference between the maximum received light amount Pmax and the minimum received light amount Pmin is less than or equal to the value Hys, Steps S209 and S210 are performed after the error display is performed for a predetermined time as illustrated in the part (q) of FIG. 7 in Step S211.

In the processing in FIG. 7, the sensitivity is adjusted to the optimum state while the received light amount is sampled, and the finally-obtained maximum received light amount Pmax and minimum received light amount Pmin are used as the reference received light amounts in order to set the threshold. However, it is not always necessary to perform the processing in FIG. 7. For example, the sensitivity adjustment processing is performed only once immediately after the manipulation of the tuning button SW1 is started, the maximum received light amount Pmax and the minimum received light amount Pmin are specified, the sensitivity is adjusted after the manipulation of the tuning button SW1 such that the maximum received light amount Pmax becomes the display maximum value, and the minimum received light amount Pmin may be corrected in response to the adjustment.

The positioning tuning (Step S7 in FIG. 5) and the maximum sensitivity tuning (Step S11 in FIG. 5) will briefly be described with no flowchart. In the positioning tuning and the maximum sensitivity tuning, it is necessary to perform the sensitivity adjustment processing using the target value different from that in Step S2 of FIG. 5. Therefore, when the kind of the tuning is fixed, the threshold is set after the sensitivity adjustment processing is performed again.

In the positioning tuning, at the time point at which three seconds elapses since the second-time button manipulation, the sensitivity is adjusted again (set to about a half of the pre-adjustment sensitivity) such that the received light amount, which is set to the display maximum value in response to the first-time button manipulation, becomes the target value (5000 that is of the intermediate value of the display range). The received light amount, which is sampled after the sensitivity adjustment processing, is set to the threshold.

As illustrated in table I, in the positioning tuning, the workpiece is not placed during the first-time button manipulation, but the workpiece is placed during the second-time button manipulation. Accordingly, for the transmission type photoelectric sensor 1, the received light amount less than the target value of the sensitivity adjustment processing is set to the threshold. For the reflection type photoelectric sensor 1, the received light amount greater than the target value of the sensitivity adjustment processing is set to the threshold.

In the maximum sensitivity tuning, when the tuning button SW1 is continuously pressed within seven seconds, both the drive current of the light projecting part 103 and the gain of the light-receiving part 104 are maximized to set the maximum sensitivity. The received light amount on the display is adjusted such that the maximum value of the received light amount, which is sampled while the tuning button SW1 is continuously pressed, is displayed as the received light amount of zero on the display part 100. The value corresponding to 10% of the display range is set to the threshold.

The received light amount set to zero on the display is not limited to the maximum value, but the average value of the received light amounts, which is sampled while the tuning button SW1 is continuously pressed, or the final sampling value may be used as the received light amount set to zero on the display.

In each kind of the tuning, the threshold is set, after the sensitivity is adjusted according to the program prepared for each kind of the tuning such that the sampled received light amount becomes the value suitable for the intended purpose. Accordingly, even if the user is not particularly aware of the necessity to adjust the sensitivity, the threshold can safely be set to the state in which the detection processing suitable for the intended purpose of the photoelectric sensor 1 is stably performed.

A common thread is performed in the sensitivity adjustment processing in Step S2 in FIG. 5, Step S102 in FIG. 6, and Step S203 in FIG. 7. In the pieces of tuning, the target value for the sensitivity adjustment processing is set by determining timing of the sensitivity adjustment processing, and the sensitivity adjustment processing is performed by calling the common thread. In the embodiment, the target value is set to the display maximum value. However, the target value is a default value, and the target value can properly be changed in the setting mode.

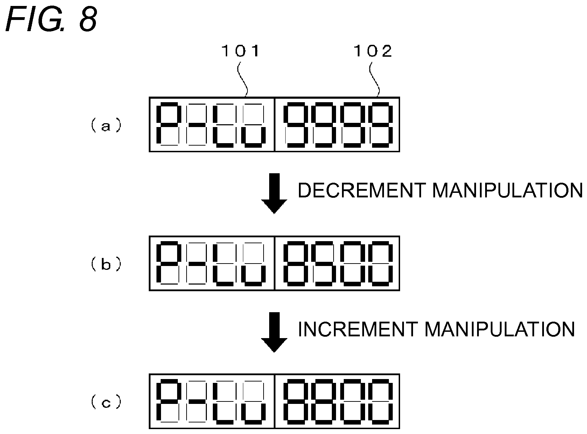

FIG. 8 illustrates an example displayed on the indicators 101 and 102 when the target value, which is used in the sensitivity adjustment processing (Step S2 in FIG. 5) performed by the initial manipulation of the tuning button SW1 and the sensitivity adjustment processing of the two-point tuning and the moving workpiece tuning, is changed in response to the user's manipulation. FIG. 8A illustrates the initial display called by the manipulation of the push-button switch SW4 in FIGS. 2 and 3 in the setting mode. In FIG. 8A, a symbol "P-Lu" expressing the setting content is displayed on the indicator 101, and the default target value (display maximum value of 9999) is displayed on the indicator 102.

When the user manipulates the switch SW3 to which a sign "-" is added in the display state in FIG. 8A, the numerical value of the indicator 102 decreases as illustrated in FIG. 8B. When the user manipulates the switch SW2 to which a sign "+" is added, the numerical value of the indicator 102 increases as illustrated in FIG. 8C. Numerical values of 100 to 9999 can be displayed by one on the indicator 102.

When the switch SW4 is manipulated after the numerical value of the indicator 102 is changed by the manipulations of the switches SW2 and SW3, the display of the indicator 101 and 102 is changed to another setting item, and the target value of the sensitivity adjustment processing is updated using the last numerical value displayed on the indicator 102. When the setting menu takes a round by manipulating the switch SW4, the setting mode returns to the measurement mode.

In the embodiment, after the kind of the tuning is fixed by the number of manipulation times of the tuning button SW1 or the manipulation time, the tuning corresponding to the fixed kind of the tuning is performed. Alternatively, not limited to this, the tuning may be started at a stage at which the kind of the tuning is not fixed, or plural kinds of tuning may concurrently be performed.

For example, in the case that the initial manipulation of the tuning button SW1 is ended within three seconds, the two-point tuning is immediately started in response to the second-time manipulation of the tuning button SW1, and the result of the two-point tuning processing is fixed when the second-time manipulation is ended within three seconds. On the other hand, when the second-time manipulation is continued for at least three seconds, the result of the two-point tuning processing is canceled to perform the positioning tuning.

The sampling of the received light amount for the moving workpiece tuning is started immediately after the sensitivity adjustment processing (Step S2), which is performed in response to the initial manipulation of the tuning button SW1, and only the processing of specifying the maximum received light amount Pmax and the minimum received light amount Pmin is performed without re-adjusting the sensitivity. In the case that the final maximum received light amount Pmax is greater than the display maximum value when the manipulation of the tuning button SW1 is ended, the sensitivity is adjusted according to an excess degree, and the minimum received light amount Pmin is also corrected so as to becomes the value suitable for the post-adjustment sensitivity.

According to the above processing, when the tuning SW1 is continuously pressed for at least seven seconds in order to perform the moving workpiece tuning, the adjustment of the sensitivity and the setting of the threshold can be performed based on the received light amounts in the whole period in which the manipulation is performed.

However, when the manipulation time of the tuning button SW1 is ended within seven seconds, the positioning tuning is aborted to perform the maximum sensitivity tuning. In the above processing, the sensitivity is set to the maximum, and the maximum value of the received light amount sampled in the positioning tuning is corrected to a value in which the sensitivity of the positioning tuning is multiplied by the magnifying factor of the maximum sensitivity. Additionally, the received light amount on the display is corrected such that the post-correction received light amount is displayed as the received light amount of zero.

As described above, according to the tuning of the embodiment, even if the user is not particularly aware of the necessity to adjust the sensitivity, the sensitivity is automatically adjusted, and the threshold suitable for the intended purpose of the photoelectric sensor 1 can be set by the adjusted sensitivity. However, even if the sensitivity and the threshold are properly adjusted, sometimes the received light amount decreases gradually due to dirt or a position shift of the leading-end head parts 11A and 12A and a temporal change of the LED 131 or the photodiode 141. When a degree of the decrease in received light amount increases, an allowance for the threshold decreases to reduce an S/N ratio. During the detection processing, usually the received light amount or the threshold used in the detection is displayed on the indicators 101 and 102. However, when the decreased received light amount is displayed from the beginning, possibly the user misunderstands that some sort of abnormality is generated.

In consideration of the above problematic point, a function of automatic adjustment processing is incorporated in the photoelectric sensor 1 of the embodiment. In the automatic adjustment processing, even if the actual received light amount changes, the received light amount displayed on the display part 100 is maintained close to the value adjusted through the tuning, and the threshold used in the detection processing is updated according to the decrease in received light amount.

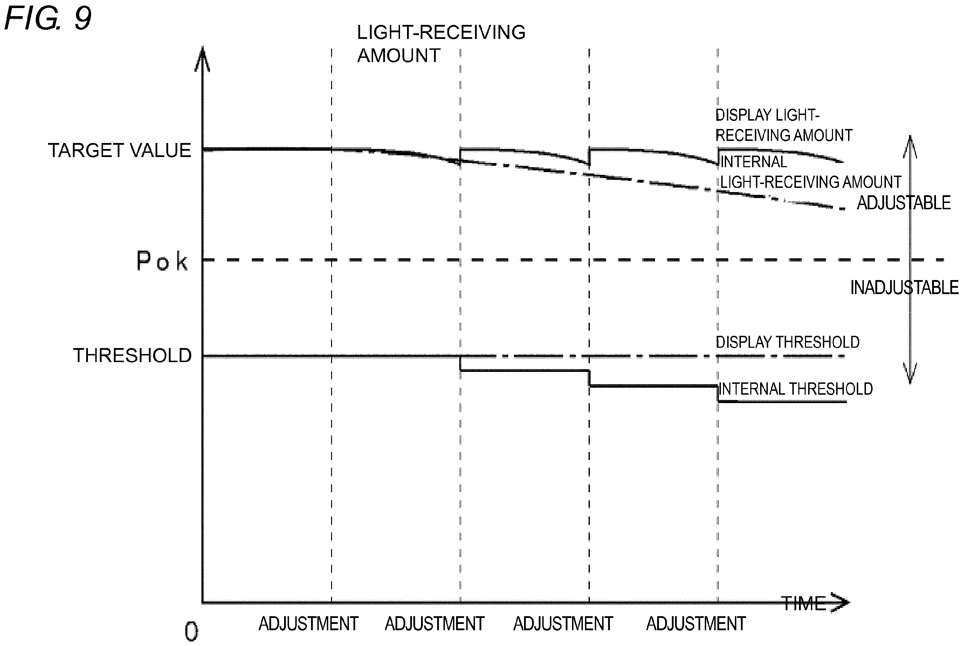

Referring to FIG. 9, a relationship between the actual received light amount (internal received light amount) expressed by the received light amount data output from the light-receiving part 104 and the received light amount (display received light amount) on the display and a relationship between the threshold (internal threshold) used in the detection processing and the threshold (display threshold) on the display are summarized in one graph with respect to the received light amount that is greater than the threshold.

As illustrated in the graph in FIG. 9, initially both the internal received light amount and the display received light amount agree with the target value, and both the internal threshold and the display threshold agree with the value set in the tuning. Then the internal received light amount decreases moderately along the time axis. However, in the embodiment, an attenuation degree of the internal received light amount is checked at predetermined time intervals, and the display received light amount is maintained closed to the target value by multiplying the internal received light amount by the multiplying factor corresponding to the attenuation degree. The display threshold is maintained at the value set in the tuning, and the internal threshold is reduced with a ratio corresponding to the attenuation degree of the internal received light amount in each time of the adjustment.

According to the above processing, while the display immediately after the tuning is maintained, the threshold is corrected to perform the detection processing according to the actually-obtained received light amount or level, so that the S/N ratio can be maintained. On the other hand, the received light amount on the display is in the stable state, so that the user can check the detection operation based on a given criterion.

Desirably a degradation degree of the internal received light amount is determined using the internal received light amount of the target value. Therefore, in the embodiment, the display received light amount and the internal threshold are adjusted using the internal received light amount that is greater than or equal to a value Pok larger than the threshold set in the tuning. Hereinafter the value Pok is referred to as "a lower limit of an adjustable range".

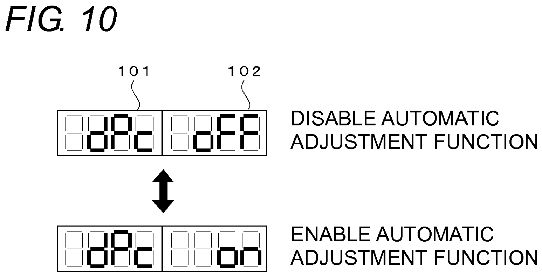

In the embodiment, because the user who has a great deal of expertise wants to correctly recognize the received light amount, whether the automatic adjustment function is enabled can be selected in the menu of the setting manipulation. FIG. 10 illustrates a display example of the display part during the selection manipulation. In FIG. 10, a character string "dPc" (abbreviating dynamic power control) expressing the automatic adjustment function is displayed on the left indicator 101, a character string "on" is displayed on the right indicator 102 when the automatic adjustment function is enabled, and a character string "oFF" is displayed on the right indicator 102 when the automatic adjustment function is disabled. The user selects one of the display of the character string "on" and the display of the character string "oFF" using the switches SW2 and SW3, and manipulates the switch SW4 to fix the selection. When the automatic adjustment function is enabled, the indicating lamp 114 is lit during the detection processing.

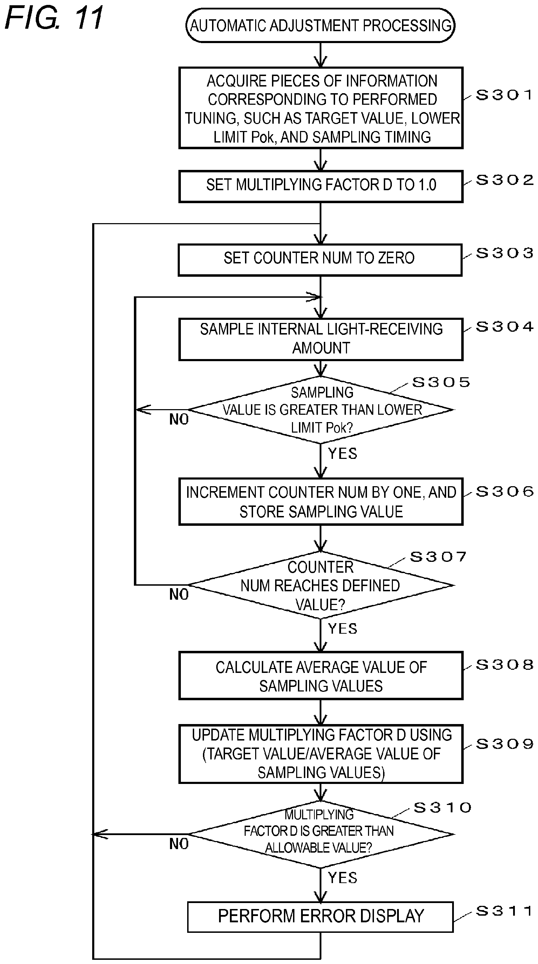

FIG. 11 illustrates a detailed procedure of the automatic adjustment processing.

The automatic adjustment processing is started, when the automatic adjustment function is enabled by the selection manipulation, and when one of the four kinds of the tuning is already performed. Pieces of information corresponding to the performed tuning, such as the target value, the lower limit Pok of the adjustable range, and sampling timing of the received light amount, are acquired in Step S301. The pieces of information are stored in the memory 106 while bundled with the program for various pieces of tuning. Alternatively, definition information is stored in order to derive parameters except the target value from the tuning result, and the parameters may be obtained after the tuning using the definition information.

In Step S302, the multiplying factor D is set to 1.0 as the initial value. In Step S303, a counter NUM is set to zero as the initial value in order to count the number of sampling times. Subsequently, the internal received light amount (the received light amount data input from the light-receiving part 104) is sampled (Step S304). When the sampled value is greater than or equal to the lower limit Pok of the adjustable range (YES in Step S305), the counter NUM is incremented, and the sampled value is stored (Step S306). When the sampled value is less than the lower limit Pok, Step S306 is skipped.

When the counter NUM reaches a predetermined defined value (YES in Step S307), the flow goes to Step S308 to calculate an average value of the stored NUM sampled value. In Step S309, the target value is divided by the average value, and the multiplying factor D is updated using the division result (Step S309).

Then, the flow returns to Step S303, and the counter NUM is reset to repeat the same processing. However, in Step S310, whether the post-update multiplying factor D is greater than a predetermined allowable value is checked before the flow returns to Step S303. When the post-update multiplying factor D is greater than the allowable value (YES in Step S310), the error display is performed for a predetermined time (Step S311).

At the same time as the above processing and the detection processing (not illustrated), the CPU 105 derives the display received light amount by multiplying the internal received light amount sampled in Step S304 by the multiplying factor D, and the CPU 105 displays the display received light amount on the display part 100 together with the display threshold. The CPU 105 obtains the internal threshold by multiplying the display threshold by an inverse number 1/D of the multiplying factor D, and the CPU 105 compares the internal threshold and the internal received light amount to determine whether the object exists during the detection processing.

In the embodiment, the manipulation part 110 including the tuning button SW1 is provided in the main body 10 of the photoelectric sensor 1. Alternatively, the manipulation part is not limited to this, and a console independent of the photoelectric sensor 1 may be used as the manipulation part. External devices, such as a personal computer and a PLC that is of an external control device, may be connected to the photoelectric sensor 1, and a signal of the manipulation performed on the external device side may be transmitted to the photoelectric sensor 1.

The scope of the present invention is defined in the appended claims.

**Table I**

| KIND OF TUNING | PURPOSE | WORK CONTENTS | SENSITIVITY ADJUSTMENT | THRESHOLD |
|---|---|---|---|---|
| TWO-POINT TUNING | DETECT EXISTENCE OR NON-EXISTENCE OF OBJECT | (1) MANIPULATE BUTTON WHILE WORKPIECE DOES | SET LARGER ONE OF RECEIVED LIGHT AMOUNTS DURING MANIPULATIONS TO DISPLAY MAXIMUM VALUE | INTERMEDIATE VALUE BETWEEN FIRST-TIME RECEIVED LIGHT AMOUNTAND SECOND-TIME RECEIVED LIGHT AMOUNT |
| MOVING WORKPIECE TUNING | DETECT MOVING OBJECT | CAUSE WORKPIECE TO PASS WHILE BUTTON IS PRESSED FOR AT LEAST | SET MAXIMUM LIGHT-RECEIVING AMOUNT IN PERIOD DURING MANIPULATION TO DISPLAY MAXIMUM VALUE | INTERMEDIATE VALUE BETWEEN MAXIMUM RECEIVED LIGHT AMOUNT AND MINIMUM RECEIVED LIGHT AMOUNT |
| POSITIONING TUNING | DETECT OBJECT LOCATED IN TARGET POSITION | (1) MANIPULATE BUTTON WHILE WORKPIECE DOES NOT EXIST (2) PRESS BUTTON FOR AT | SET RECEIVED LIGHT AMOUNT DURING FIRST-TIME MANIPULATION TO INTERMEDIATE VALUE OF DISPLAY RANGE | RECEIVED LIGHT AMOUNT AT TIME POINT AT WHICH THREE SECONDS ELAPSE SINCE SECOND-TIME MANIPULATION |
| MAXIMUM SENSITIVITY TUNING | SWITCH ON AND OFF WITH RELATIVELY SMALL CHANGE OF RECEIVED LIGHT AMOUNT | TRANSMISSION TYPE-WORKPIECE EXISTS REFLECTION TYPE-WORKPIECE NOT EXIST | DISPLAYED RECEIVED LIGHT AMOUNT IS SET TO ZERO WHILE SENSITIVITY IS SET TO MAXIMUM | VALUE THAT IS 10% of DISPLAY RANGE AND IS LARGER THAN ZERO |

## Claims

1. A photoelectric sensor (1) comprising:
a light projecting part (103) configured to project light for detection;
a light-receiving part (104) configured to perform light-receiving processing according to a light projecting operation;
a detector configured to perform object detection processing by comparing a received light amount to a threshold previously-stored; and
a manipulation part (110) configured to be used in a setting manipulation, wherein the manipulation part (110) comprises one switch (SW1) configured to receive a manipulation corresponding to one of a plurality of tunings, wherein the plurality of tunings defined for each intended purpose of the photoelectric sensor (1) are determined according to how the one switch (SW1) is manipulated by a user, wherein the manipulation corresponding to the one of the plurality of tunings is performed to issue an instruction to measure the received light amount used for setting the threshold by:
determining a reference received light amount, the reference received light amount being used to set the threshold based on the received light amount measured according to a determination criterion, the determination criterion being defined by how the one switch (SW1) is manipulated by the user; and
performing sensitivity adjustment of the photoelectric sensor (1) in order to set the reference received light amount to a value suitable for the setting of the threshold
**characterized in that** the photoelectric sensor (1) further comprises a display part (100) that is configured to:
indicate a character string that represents the number of times the one switch (SW1) is being manipulated;
indicate a character string that represents the one of the plurality
of tunings determined by how the one switch (SW1) is manipulated by the user;
indicate by switching an indicating lamp (115) from a lighting state to a blinking state when the one switch (SW1) is continuously pressed for three seconds; and
display the threshold, which is fixed based on the reference received light amount, together with the received light amount after sensitivity is adjusted

2. The photoelectric sensor (1) according to claim 1, wherein the setting of the threshold includes adjusting the measured received light amount to a target value, the target value being defined according to the determination criterion.

3. The photoelectric sensor (1) according to claim 2, further comprising:
a storage part (106) in which the target value is stored, wherein the target value is used in the sensitivity adjustment.

4. The photoelectric sensor (1) according to claim 1 further comprising:
a storage part (106) in which a sensitivity adjustment rule and a received light amount decision rule are stored, the sensitivity adjustment rule defining processing of sensitivity adjustment using the received light amount measured, the received light amount decision rule defining a process of fixing the reference received light amount, the reference received light amount being used to set the threshold based on the received light amount measured for sensitivity adjustment,
wherein the detector performs object detection processing by comparing the received light amount obtained through light-receiving processing with the threshold,
wherein sensitivity adjustment according to the sensitivity adjustment rule is done while measuring the received light amount and when the manipulation is performed on the one switch (SW1), the sensitivity adjustment rule is determined according to how the one switch (SW1) is manipulated,
wherein the reference received light amount is suitable for the sensitivity adjustment and the reference received light amount used to set the threshold is decided based on the received light amount measured for sensitivity adjustment, and based on the received light amount decision rule fixed by one of the plurality of tunings.

5. The photoelectric sensor (1) according to claim 4, wherein the sensitivity adjustment rule defining that the sensitivity being adjusted with respect to at least one of the plurality of tunings such that the received light amount measured in response to the manipulation is suitable for a predetermined target value and that, when the received light amount measured after the adjustment is greater than the target value, the sensitivity adjustment is restarted such that the received light amount greater than the target value is suitable for the target value.

6. The photoelectric sensor (1) according to claim 4, wherein the sensitivity adjustment rule defining that the sensitivity is adjusted such that a received light amount measured in response to a first-time manipulation is suitable for a predetermined target value with respect to a tuning corresponding to having the one switch (SW1) being manipulated twice, the sensitivity adjustment rule further defining that, when a received light amount measured in response to a second-time manipulation is greater than the target value used in the sensitivity adjustment, the sensitivity adjustment is restarted such that the received light amount greater than the target value is suitable for the target value, and that the received light amount caused to agree with the target value in the sensitivity adjustment performed in response to the first-time manipulation is corrected to a value suitable for the re-adjusted sensitivity according to the restart of the sensitivity adjustment, the received light amount decision rule defining that the pair of received light amounts, which are measured in response to the first-time manipulation and the second-time manipulation and are suitable for the final sensitivity, is set to the reference received light amount used to set the threshold.

7. The photoelectric sensor (1) according to claim 4, wherein the sensitivity adjustment rule defining that a maximum value and a minimum value of the measured received light amounts are extracted while the received light amount is measured during the manipulation with respect to a tuning corresponding to having the one switch (SW1) being manipulated for a predetermined time and that the sensitivity adjustment is performed every time the maximum value is updated through the tuning while the minimum value of the received light amounts at that time point is corrected to a value suitable for the adjusted sensitivity, the received light amount decision rule defining that the maximum value and the minimum value of the received light amounts are set to the reference received light amount used to set the threshold at a time point at which the manipulation is ended.

8. The photoelectric sensor (1) according to claim 1 or 4, wherein the photoelectric sensor (1) is configured to start tuning at a stage at which the kind of the tuning is not fixed,
wherein the manipulation corresponding to the one of the plurality of tunings is fixed by determining the number of times the one switch is manipulated and the duration of each manipulation of the one switch.

9. The photoelectric sensor (1) according to claim 1 or 4, wherein the photoelectric sensor is configured to determine if automatic adjustment processing is enabled, and if it is determined that automatic adjustment processing is enabled, the photoelectric sensor is configured to perform the automatic adjustment processing after the one of a plurality of tunings is already performed,
wherein the automatic adjustment processing comprises:
acquiring information corresponding to the performed tuning,
obtaining a degree of a change in received light amount suitable for the adjustment performed through the sensitivity adjustment processing with respect to the received light amount used in detection processing in predetermined timing while the detector performs the detection processing,
changing the stored threshold according to the degree of the change, and changing the received light amount displayed on the display part (100) to a value in which actual received light amount is corrected according to the degree of the change, and
wherein the display part is configured to indicate by means of a second indicating light (114) that the automatic adjustment processing is enabled.

## Patentansprüche

1. Photoelektrischer Sensor (1), aufweisend:
einen Lichtprojektionsabschnitt (103), der eingerichtet ist, Licht für eine Erfassung zu projizieren;
einen Lichtempfangsabschnitt (104), der eingerichtet ist, eine Lichtempfangsverarbeitung gemäß einem Lichtprojektionsbetrieb durchzuführen;
einen Detektor, der eingerichtet ist, eine Objekterfassungsverarbeitung durch Vergleichen einer empfangenen Lichtmenge mit einem zuvor gespeicherten Schwellenwert durchzuführen; und
einen Bedienabschnitt (110), der so eingerichtet ist, dass er bei einer Einstellungsbedienung verwendet wird, wobei der Bedienabschnitt (110) einen Schalter (SW1) umfasst, der so eingerichtet ist, dass er einer Bedienung unterliegt, die einer von mehreren Abstimmungen entspricht, wobei die mehreren Abstimmungen, die für jeden beabsichtigten Zweck des photoelektrischen Sensors (1) definiert sind, entsprechend der Art und Weise bestimmt werden, wie der eine Schalter (SW1) von einem Benutzer bedient wird, wobei die Bedienung, die der einen der mehreren Abstimmungen entspricht, durchgeführt wird, um eine Anweisung zum Messen der empfangenen Lichtmenge auszugeben, die zum Einstellen des Schwellenwerts verwendet wird, indem:
eine empfangene Referenzlichtmenge bestimmt wird, wobei die empfangene Referenzlichtmenge verwendet wird, um die Schwelle auf der Grundlage der empfangenen Lichtmenge einzustellen, die gemäß einem Bestimmungskriterium gemessen wird, wobei das Bestimmungskriterium dadurch definiert ist, wie der eine Schalter (SW1) durch den Benutzer betätigt wird; und
eine Empfindlichkeitseinstellung des photoelektrischen Sensors (1) durchgeführt wird, um die empfangene Referenzlichtmenge auf einen für die Einstellung des Schwellenwerts geeigneten Wert einzustellen,
**dadurch gekennzeichnet, dass** der fotoelektrische Sensor (1) ferner einen Anzeigeabschnitt (100) umfasst, der eingerichtet ist:
eine Zeichenkette anzuzeigen, die die Anzahl der Betätigungen des einen Schalters (SW1) darstellt;
eine Zeichenkette anzuzeigen, die die eine der mehreren Stimmungen darstellt, die dadurch bestimmt wird, wie der eine Schalter (SW1) durch den Benutzer betätigt wird;
Anzeigen durch Umschalten einer Anzeigelampe (115) von einem leuchtenden Zustand in einen blinkenden Zustand, wenn der eine Schalter (SW1) für drei Sekunden kontinuierlich gedrückt wird; und
Anzeigen des Schwellenwerts, der auf der Grundlage der empfangenen Referenzlichtmenge festgelegt ist, zusammen mit der empfangenen Lichtmenge, nachdem die Empfindlichkeit eingestellt wurde.

2. Photoelektrischer Sensor (1) nach Anspruch 1, wobei die Einstellung des Schwellenwerts das Einstellen der gemessenen empfangenen Lichtmenge auf einen Zielwert beinhaltet, wobei der Zielwert gemäß dem Bestimmungskriterium definiert ist.

3. Photoelektrischer Sensor (1) nach Anspruch 2, ferner umfassend:
einen Speicherabschnitt (106), in dem der Zielwert gespeichert ist, wobei der Zielwert bei der Empfindlichkeitseinstellung verwendet wird.

4. Photoelektrischer Sensor (1) nach Anspruch 1, der ferner umfasst:
einen Speicherabschnitt (106), in dem eine Empfindlichkeitsanpassungsregel und eine Empfangslichtmengen-Entscheidungsregel gespeichert sind, wobei die Empfindlichkeitsanpassungsregel die Verarbeitung der Empfindlichkeitsanpassung unter Verwendung der gemessenen Empfangslichtmenge definiert, wobei die Empfangslichtmengen-Entscheidungsregel einen Prozess der Festlegung der Referenz-Empfangslichtmenge definiert, wobei die Referenz-Empfangslichtmenge verwendet wird, um den Schwellenwert auf der Grundlage der gemessenen Empfangslichtmenge für die Empfindlichkeitsanpassung festzulegen,
wobei der Detektor eine Objekterfassungsverarbeitung durchführt, indem er die durch die Lichtempfangsverarbeitung erhaltene empfangene Lichtmenge mit dem Schwellenwert vergleicht,
wobei die Empfindlichkeitseinstellung gemäß der Empfindlichkeitseinstellungsregel durchgeführt wird, während die empfangene Lichtmenge gemessen wird, und wenn die Bedienung an dem einen Schalter (SW1) durchgeführt wird, die Empfindlichkeitseinstellungsregel bestimmt wird, je nachdem, wie der eine Schalter (SW1) bedient wird,
wobei die empfangene Referenzlichtmenge für die Empfindlichkeitseinstellung geeignet ist und die empfangene Referenzlichtmenge, die verwendet wird, um den Schwellenwert einzustellen, auf der Grundlage der empfangenen Lichtmenge, die für die Empfindlichkeitseinstellung gemessen wird, und auf der Grundlage der Entscheidungsregel für die empfangene Lichtmenge, die durch eine der mehreren Abstimmungen festgelegt wird, entschieden wird.

5. Photoelektrischer Sensor (1) nach Anspruch 4, wobei die Empfindlichkeitseinstellungsregel definiert, dass die Empfindlichkeit in Bezug auf mindestens eine der mehreren Abstimmungen so eingestellt wird, dass die als Reaktion auf die Bedienung gemessene empfangene Lichtmenge für einen vorbestimmten Zielwert geeignet ist, und dass, wenn die nach der Einstellung gemessene empfangene Lichtmenge größer als der Zielwert ist, die Empfindlichkeitseinstellung neu gestartet wird, so dass die empfangene Lichtmenge, die größer als der Zielwert ist, für den Zielwert geeignet ist.

6. Photoelektrischer Sensor (1) nach Anspruch 4, wobei die Empfindlichkeitseinstellungsregel definiert, dass die Empfindlichkeit so eingestellt wird, dass eine empfangene Lichtmenge, die als Reaktion auf eine erstmalige Bedienung gemessen wird, für einen vorbestimmten Zielwert in Bezug auf eine Abstimmung geeignet ist, die einer zweimaligen Bedienung des einen Schalters (SW1) entspricht, wobei die Empfindlichkeitseinstellungsregel ferner definiert, dass, wenn eine empfangene Lichtmenge, die als Reaktion auf eine zweitmalige Bedienung gemessen wird, größer als der Zielwert ist, der bei der Empfindlichkeitseinstellung verwendet wird, die Empfindlichkeitseinstellung neu gestartet wird, so dass die empfangene Lichtmenge, die größer als der Zielwert ist, für den Zielwert geeignet ist, und dass die empfangene Lichtmenge, die dazu veranlasst wurde, mit dem Zielwert in der Empfindlichkeitseinstellung übereinzustimmen, die als Reaktion auf die erstmalige Bedienung durchgeführt wurde, auf einen Wert korrigiert wird, der für die neu eingestellte Empfindlichkeit gemäß dem Neustart der Empfindlichkeitseinstellung geeignet ist, wobei die Entscheidungsregel für die empfangene Lichtmenge definiert, dass das Paar von empfangenen Lichtmengen, die als Reaktion auf die erstmalige Bedienung und die zweitmalige Bedienung gemessen werden und für die endgültige Empfindlichkeit geeignet sind, auf die empfangene Referenzlichtmenge gesetzt wird, die verwendet wird, um den Schwellenwert einzustellen.

7. Photoelektrischer Sensor (1) nach Anspruch 4, wobei die Empfindlichkeitsanpassungsregel definiert, dass ein Maximalwert und ein Minimalwert der gemessenen empfangenen Lichtmengen extrahiert werden, während die empfangene Lichtmenge während der Bedienung in Bezug auf eine Abstimmung gemessen wird, die einer Bedienung des einen Schalters (SW1) für eine vorbestimmte Zeit entspricht, und dass die Empfindlichkeitsanpassung jedes Mal durchgeführt wird, wenn der Maximalwert durch die Abstimmung aktualisiert wird, während der Minimalwert der empfangenen Lichtmengen zu diesem Zeitpunkt auf einen für die angepasste Empfindlichkeit geeigneten Wert korrigiert wird, die Entscheidungsregel für die empfangene Lichtmenge definiert, dass der Maximalwert und der Minimalwert der empfangenen Lichtmengen auf die empfangene Referenzlichtmenge gesetzt werden, die verwendet wird, um den Schwellenwert zu einem Zeitpunkt festzulegen, an dem die Bedienung beendet ist.

8. Photoelektrischer Sensor (1) nach Anspruch 1 oder 4, wobei der photoelektrische Sensor (1) eingerichtet ist, die Abstimmung in einem Stadium zu beginnen, in dem die Art der Abstimmung nicht festgelegt ist,
wobei die Bedienung, die der einen der mehreren Abstimmungen entspricht, festgelegt wird, indem die Anzahl der Bedienungen des einen Schalters und die Dauer jeder Bedienung des einen Schalters bestimmt wird.

9. Photoelektrischer Sensor (1) nach Anspruch 1 oder 4, wobei der photoelektrische Sensor eingerichtet ist, zu bestimmen, ob die automatische Einstellungsverarbeitung aktiviert ist, und wenn bestimmt wird, dass die automatische Einstellungsverarbeitung aktiviert ist, ist der photoelektrische Sensor eingerichtet, um die automatische Einstellungsverarbeitung durchzuführen, nachdem die eine von mehreren Abstimmungen bereits durchgeführt wurde,
wobei die automatische Einstellungsverarbeitung umfasst:
Erfassen von Informationen, die der durchgeführten Abstimmung entsprechen,
Erhalten eines Grades einer Änderung der empfangenen Lichtmenge, die für die durch die Empfindlichkeitsanpassungsverarbeitung durchgeführte Anpassung geeignet ist, in Bezug auf die empfangene Lichtmenge, die bei der Erfassungsverarbeitung in einem vorbestimmten Zeitablauf verwendet wird, während der Detektor die Erfassungsverarbeitung durchführt,
Ändern des gespeicherten Schwellenwerts entsprechend dem Grad der Änderung, und Ändern der auf dem Anzeigeabschnitt (100) angezeigten empfangenen Lichtmenge auf einen Wert, bei dem die tatsächlich empfangene Lichtmenge entsprechend dem Grad der Änderung korrigiert wird, und
wobei der Anzeigeabschnitt eingerichtet ist, mittels einer zweiten Anzeigelampe (114) anzuzeigen, dass die automatische Einstellungsverarbeitung aktiviert ist.

## Revendications

1. Capteur photoélectrique (1), comprenant :
une partie de projection de lumière (103) conçue pour projeter de la lumière à des fins de détection ;
une partie de réception de lumière (104) configurée pour mettre en oeuvre un traitement de réception de lumière conformément à une opération de projection de lumière ;
un détecteur configuré pour mettre en oeuvre un traitement de détection d'objet par une comparaison d'une quantité de lumière reçue à un seuil mémorisé au préalable ; et
une partie de manipulation (110) conçue pour être utilisée lors d'une manipulation de paramétrage, dans lequel
la partie de manipulation (110) comprend un commutateur (SW1) conçu pour recevoir une manipulation correspondant à un ajustement d'une pluralité d'ajustements, dans lequel les ajustements de la pluralité d'ajustements définis pour chaque objectif souhaité du capteur photoélectrique (1) sont déterminés conformément à la façon dont ledit commutateur (SW1) est manipulé par un utilisateur, dans lequel la manipulation correspondant audit ajustement de la pluralité d'ajustements est mise en oeuvre pour émettre une instruction dont l'objet est de mesurer la quantité de lumière reçue utilisée pour paramétrer le seuil par :
une détermination d'une quantité de lumière reçue de référence, la quantité de lumière reçue de référence étant utilisée pour paramétrer le seuil sur la base de la quantité de lumière reçue mesurée conformément à un critère de détermination, le critère de détermination étant défini par la façon dont ledit commutateur (SW1) est manipulé par l'utilisateur ; et
une mise en oeuvre de réglage de sensibilité du capteur photoélectrique (1) afin que de paramétrer la quantité de lumière reçue de référence à une valeur appropriée au paramétrage du seuil
**caractérisé en ce que** le capteur photoélectrique (1) comprend en outre une partie d'affichage (100) qui est configurée pour :
indiquer une chaîne de caractères qui représente le nombre de manipulations dudit commutateur (SW1) ;
indiquer une chaîne de caractères qui représente ledit ajustement de la pluralité d'ajustements déterminé par la façon dont ledit commutateur (SW1) est manipulé par l'utilisateur ;
indiquer par un passage d'un voyant (115) d'un état d'éclairage à un état clignotant le moment auquel ledit commutateur (SW1) fait l'objet d'une pression continue pendant trois secondes ;
et
afficher le seuil, qui est fixé sur la base de la quantité de lumière reçue de référence, conjointement avec la quantité de lumière reçue après le réglage de sensibilité.

2. Capteur photoélectrique (1) selon la revendication 1, dans lequel le paramétrage du seuil consiste à régler la quantité de lumière reçue mesurée à une valeur cible, la valeur cible étant définie conformément au critère de détermination.

3. Capteur photoélectrique (1) selon la revendication 2, comprenant en outre :
une partie de mémorisation (106) dans laquelle est mémorisée la valeur cible, dans lequel la valeur cible est utilisée lors du réglage de sensibilité.

4. Capteur photoélectrique (1) selon la revendication 1, comprenant en outre :
une partie de mémorisation (106) dans laquelle sont mémorisées une règle de réglage de sensibilité et une règle de décision de quantité de lumière reçue, la règle de réglage de sensibilité définissant un traitement de réglage de sensibilité utilisant à la quantité de lumière reçue mesurée, la règle de décision de quantité de lumière reçue définissant un processus de fixation de la quantité de lumière reçue de référence, la quantité de lumière reçue de référence étant utilisée pour paramétrer le seuil sur la base de la quantité de lumière reçue mesurée à des fins de réglage de sensibilité,
dans lequel le détecteur met en oeuvre un traitement de détection d'objet par une comparaison de la quantité de lumière reçue, obtenue par l'intermédiaire du traitement de réception de lumière, au seuil,
dans lequel un réglage de sensibilité conformément à la règle de réglage de sensibilité est effectué tout en mesurant la quantité de lumière reçue et, lorsque la manipulation est mise en oeuvre sur ledit commutateur (SW1), la règle de réglage de sensibilité est déterminée conformément à la façon dont ledit commutateur (SW1) est manipulé,
dans lequel la quantité de lumière reçue de référence est appropriée au réglage de sensibilité et la quantité de lumière reçue de référence utilisée pour paramétrer le seuil est décidée sur la base de la quantité de lumière reçue mesurée à des fins de réglage de sensibilité, et sur la base de la règle de décision de quantité de lumière reçue fixée par un ajustement de la pluralité d'ajustements.

5. Capteur photoélectrique (1) selon la revendication 4, dans lequel la règle de réglage de sensibilité définissant que la sensibilité a été réglée par rapport à au moins un ajustement de la pluralité d'ajustements de sorte que la quantité de lumière reçue mesurée en réponse à la manipulation soit appropriée pour une valeur cible prédéterminée et que, lorsque la quantité de lumière reçue mesurée après le réglage est supérieure à la valeur cible, le réglage de sensibilité soit redémarré de sorte que la quantité de lumière reçue supérieure à la valeur cible soit appropriée pour la valeur cible.

6. Capteur photoélectrique (1) selon la revendication 4, dans lequel la règle de réglage de sensibilité définissant que la sensibilité est réglée de sorte qu'une quantité de lumière reçue mesurée en réponse à une première manipulation soit appropriée pour une valeur cible prédéterminée par rapport à un ajustement correspondant au fait que ledit commutateur (SW1) a été manipulé deux fois, la règle de réglage de sensibilité définissant en outre que, lorsqu'une quantité de lumière reçue mesurée en réponse à une seconde manipulation est supérieure à la valeur cible utilisée lors du réglage de sensibilité, le réglage de sensibilité est redémarré de sorte que la quantité de lumière reçue supérieure à la valeur cible soit appropriée pour la valeur cible, et que la quantité de lumière reçue amenée à satisfaire la valeur cible lors du réglage de sensibilité mis en oeuvre en réponse à la première manipulation soit corrigée à une valeur appropriée pour la sensibilité réglée de nouveau conformément au redémarrage du réglage de sensibilité, la règle de décision de quantité de lumière reçue définissant que les deux quantités de lumière reçue, qui sont mesurées en réponse à la première manipulation et à la seconde manipulation et qui sont appropriées pour la sensibilité finale, sont paramétrées à la quantité de lumière reçue de référence utilisée pour paramétrer le seuil.

7. Capteur photoélectrique (1) selon la revendication 4, dans lequel la règle de réglage de sensibilité définissant une valeur maximale et une valeur minimale des quantités de lumière reçue mesurées sont extraites tandis que la quantité de lumière reçue est mesurée pendant la manipulation par rapport à un ajustement correspondant au fait que ledit commutateur (SW1) est manipulé pendant un temps prédéterminé et que le réglage de sensibilité est mis en oeuvre à chaque fois que la valeur maximale est mise à jour par l'intermédiaire de l'ajustement tandis que la valeur minimale des quantités de lumière reçue à cet instant est corrigée à une valeur appropriée pour la sensibilité réglée, la règle de décision de quantité de lumière reçue définissant que la valeur maximale et la valeur minimale des quantités de lumière reçue sont paramétrées à la quantité de lumière reçue de référence utilisée pour paramétrer le seuil à un instant auquel la manipulation prend fin.

8. Capteur photoélectrique (1) selon la revendication 1 ou la revendication 4, dans lequel le capteur photoélectrique (1) est configuré pour démarrer un ajustement à un stade auquel le type de l'ajustement n'est pas fixé,
dans lequel la manipulation correspondant audit ajustement de la pluralité d'ajustements est fixée par une détermination du nombre de manipulations dudit commutateur et par la durée de chaque manipulation dudit commutateur.

9. Capteur photoélectrique (1) selon la revendication 1 ou la revendication 4, dans lequel le capteur photoélectrique est configuré pour déterminer si un traitement de réglage automatique est validé, et s'il est déterminé que le traitement de réglage automatique est validé, le capteur photoélectrique est configuré pour mettre en oeuvre le traitement de réglage automatique après l'exécution déjà effectuée dudit ajustement d'une pluralité d'ajustements,
dans lequel le traitement de réglage automatique consiste à :
acquérir des informations correspondant à l'ajustement mis en oeuvre,
obtenir un degré d'une variation de quantité de lumière reçue appropriée au réglage mis en oeuvre par l'intermédiaire du traitement de réglage de sensibilité par rapport à la quantité de lumière reçue lors d'un traitement de détection sur une durée prédéterminée tandis que le détecteur met en oeuvre le traitement de détection,
modifier le seuil mémorisé conformément au degré de la variation, et modifier la quantité de lumière reçue affichée sur la partie d'affichage (100) à une valeur dans laquelle une quantité de lumière reçue courante est corrigée conformément au degré de la variation, et
dans lequel la partie d'affichage est configurée pour indiquer, au moyen d'un second voyant (114), que le traitement de réglage automatique est validé.
